# NEUE EUROPÄISCHE PATENTSCHRIFT

(11) **EP 0 004 633 B2**
(45) Veröffentlichungstag und Bekanntmachung des Hinweises auf die Entscheidung über den Einspruch: **24.08.1994**
(45) Hinweis auf die Patenterteilung: 05.06.1985
(21) Anmeldenummer: 79100924.4
(22) Anmeldetag: 28.03.1979
(51) Int. Cl.: B29D 7/01, C08J 5/18, C08J 7/04

(54) **Verfahren zur Herstellung einer heissiegelbaren, opaken Kunststoffolie und ihre Verwendung**
Process for the preparation and application of a heat-sealable opaque synthetic film
Procédé de fabrication et application d'une feuille opaque thermosoudable en matière synthétique

(30) Priorität: 03.04.1978 DE 2814311
(43) Veröffentlichungstag der Anmeldung: 17.10.1979
(73) Patentinhaber: HOECHST AKTIENGESELLSCHAFT, 65926 Frankfurt am Main (DE)
(72) Erfinder: Gebhardt, Dieter, D-6650 Homburg (DE); Crass, Günther, D-6204 Taunusstein 4 (DE); Janocha, Siegfried, Dr., D-6200 Wiesbaden (DE)

(56) Entgegenhaltungen:
- DE-A- 2 112 030
- DE-A- 2 460 597
- DE-A- 2 637 978
- DE-B- 1 694 694
- DE-B- 1 964 882
- GB-A- 822 498
- GB-A- 915 589
- GB-A- 922 288
- GB-A- 924 461
- GB-A- 951 768
- GB-A- 1 441 178
- US-A- 3 154 461
- US-A- 3 508 944
- US-A- 3 697 475
- US-A- 3 808 027
- J. R. Quick et al., "Generation of Micropores in Plastic Film Papers and Processes" (ersch. Soc. Plast. Eng.) Techn. Pap. 19 (1973), S. 24 - 34
- Abstracts of Papers - Am. Chem. Soc., Sept. 8 - 13, 1974, OR PL 26
- Am. Chem. Soc., Dir. Org. Plast. Chem. Bd. V 34, Heft 2, S. 75 - 80, 1974

## Beschreibung

Die Erfindung bezieht sich auf ein Verfahren zur Herstellung einer opaken Folie aus thermoplastischem, organischem Kunststoff von der im Oberbegriff des Anspruchs 1 genannten Art und auf ihre Verwendung.

Für viele Anwendungen, besonders zur Verpakkung von Lebensmitteln, werden ausreichend lichtundurchlässige, fettabstoßende und wasserdampfdichte Folien benötigt. Die bekannten opaken Kunststoffolien zeigen zwar diese Eigenschatten, sind jedoch nicht heißsiegelfähig und zeigen nur matte, stumpfe Oberflächen. Auch ihre Bedruckbarkeit ist nicht optimal.

Es ist deshalb Aufgabe der Erfindung, die opaken thermoplastischen Kunststoffolien bezüglich ihrer Heißsiegelfähigkeit, ihres Aussehens und ihrer Bedruckbarkeit zu verbessern.

Es sind zwar eine Vielzahl von Verfahren und Verbindungen bekannt, die zur Herstellung einer Heißsiegelschicht auf einer Kunststoffolie herangezogen werden können, wobei jedoch zu erwarten ist, daß das matte Aussehen einer opaken Kunststoffolie nicht verbessert wird.

Überraschenderweise hat sich nun gezeigt, daß die erfindungsgemäße Aufgabe durch das Verfahren mit den im Anspruch 1 genannten Merkmalen gelöst wird. Die Unteransprüche 2 bis 7 geben bevorzugte Ausführungsformen des Verfahrens zur Herstellung der Folie wieder.

Eine mit diesen Merkmalen hergestellte Folie zeichnet sich gegenüber den nach bekannten Verfahren hergestellten opaken Folien von der im Oberbegriff des Anspruchs 1 beschriebenen Gattung vor allem dadurch aus, daß sie überraschenderweise neben einer guten Siegelnahtfestigkeit und guten mechanischen Eigenschaften einen pertmuttartigen Glanz aufweist.

Die Folie eignet sich wegen ihres werbewirksamen Aussehens besonders vorteilhaft zur Herstellung von undurchsichtigen Verpackungen, insbesondere für lichtempfindliche Nahrungsmittel. Sie kann jedoch auch für andere Verwendungszwecke eingesetzt werden, bei denen opake heißsiegelbare Kunststoffolien mit perimuttartigem Glanz benötigt werden. Das für die Heißsiegelschicht(en) vorgesehene Material ist bekannt und wird z B. in DE-A-16 94 694, DE-A-24 60 597 und DE-A-26 37 978 beschrieben. Absatz:

Das erfindungsgemäße Herstellungsverfahren geht dabei beispielweise von der Lehre der beiden zuletzt benannten Druckschriften aus, die im Oberbegriff des Anspruchs 1 berücksichtigt ist. Deren Kombination mit den Elementen des kennzeichnenden Teils führt dazu, daß aufgrund der Vakuolenbildung beim Verstrecken die Dichte der Folie kleiner ist als die rechnerische Dichte aus Art und Anteil der Einzelkomponenten (Polymere und feste Teilchen).

Die gemäß der Erfindung hergestellte Folie zeigt weiterhin den Vorteil, daß sie auf allen üblichen Druckmaschinen hervorragend bedruckt werden kann und auf den bekannten Verpackungsmaschinen einsetzbar ist. Aufgrund ihres guten Schlupfvermögens zeigt die Folie ausgezeichnetes Verarbeitungsverhaltens. Das ist vermutlich darauf zurückzuführen, daß die Siegelschicht Erhebungen aufweist, welche auf die in der Oberfläche der Grundschicht unterhalb der Siegelschicht vorhandenen Partikel zurückzuführen sind.

Die Grundschicht kann sowohl einseitig als auch beidseitig eine Heißsiegelschicht aufweisen, wobei bei beidseitiger Beschichtung die Möglichkeit unterschiedlicher Schichtstärken oder verschiedener Materialien gegeben ist, was von dem jeweiligen Anwendungszweck abhängig ist. Erfindungswesentlich ist, daß die Folienoberfläche, welche das pertmuttartige Aussehen erhalten soll, die Heißsiegelschicht aufweist.

Gegenstand der Erfindung ist weiterhin die Verwendung der Folie für Verpackungszwecke. Die Unteransprüche 2 bis 7 geben Weiterbildungen des Verfahrens zur Herstellung der Folie an.

Das Verfahren geht aus von dem bekannten Verfahren zur Herstellung von opaken Flachfolien, bei denen die mit fein verteilten, festen Calciumcarbonat-Partikeln einer Größe von 0,2 bis 20 Mikrometer, vorzugsweise 2 bis 8 Mikrometer, und einer Menge von 1 bis 25 Gew.-%, vorzugsweise 5 bis 15 Gew.-%, bezogen auf das Gewicht des Polymeran, versetzte Polymerschmelze extrudiert wird. Üblicherweise verwendete Partikel aus vorzugsweise anorganischem Material wie Titandioxid, oder Siliciumdioxid, aber auch opake organische Partikel, z. B. aus vernetztem Kunststoff, deren Schmelzpunkt oberhalb der während des Verarbeitungsprozesses auftretenden Temperaturen liegt, können mitverwendet werden.

Erfindungsgemäß bildet diese Polymerschmelze die Grundschicht und wird zusammen mit der Schmeize des die Heißsiegelschicht(en) bildenden Polymeren coextrudiert, wobei man zur Herstellung der Flachfolie eine übliche Flachdüse verwendet. Zum Verfestigen der Folie wird anschließend abgekühlt. z. B. mit einer Kühltrommel bei 10 bis 50 _{°} C. Danach wird die Vorfolie gemäß den Angaben des Anspruchs 1 auf die Strecktemperatur aufgeheizt und in längsrichtung zwischen Walzenpaaren mit verschiedenen Laufgeschwindigkeiten gestreckt. Anschließend wird die Folie während des Weitertransportes abgekühlt und vor dem folgenden Querstreckprozeß erneut aufgeheizt. Das Strecken in Querrichtung erfolgt beispielsweise in einem Kluppenrahmen bekannter Ausführung. Abschließend erfolgt die Thermofixierung der Folie.

Erfindungswesentlich ist, daß das durch Coextrusion erhaltene Laminat bei einer Temperatur in Längsrichtung gestreckt wird, welche bis zu 20 _{°} C unterhalb der bei der üblichen Längsstreckung angewendeten Temperatur zur Herstellung klarer Folien aus dem gleichen Material liegt, während die Temperaturen der anderen Verfahrensschritte dem Stand der Technik entsprechend eingestellt sind.

Bei den Folien mit einer Grundschicht aus einem im wesentlichen isotaktischen Polypropylen-Homopolymerisat ist die Temperatur während der Längsstreckung vorzugsweise um 5 bis 10 _{°}C erniedrigt, d. h. sie liegt bei 120 bis 130 _{°}C, während die Temperatur während der Querstrekkung bei 160 bis 170 _{°} C und während der Thermofixierung bei 150 bis 160 °C liegt und somit übliche Werte erreicht.

Das folgende Beispiel dient zur Erläuterung der Erfindung.

Eine 33 Mikrometer dicke Polypropylenfolie mit beidseitig vorhandenen heißsiegelfähigen Deckschichten von jeweils 1 Mikrometer wird wie folgt hergestellt: Coextrusion mit einer Flachdüse bei etwa 270 °C. Die Polypropylenschmeize enthält 8 Gew.-% fein verteilte Calciumcarbonatteilchen einer mittleren Teilchengröße von 2,4 Mikrometer. Die Deckschicht besteht jeweils aus einem statistischen Mischpolymerisat von Propylen und 4 Gew.-% Äthylen. Nach dem Abkühlen mit einer Kühlwalze auf ca. 30 _{°} C wird die Folie bei 125 _{°} C in Längsrichtung" Streckverhältnis 5,5, und anschließend bei 165 _{°} C in Querrichtung, Streckverhältnis 9,0, gestreckt. Die abschließende Thermofixierung erfolgt bei 160 °C.

Die Heißsiegelfestigkeit beträgt 3,0 N/20 mm und wurde auf folgende Weise bestimmt :

Zwei Folien werden bei 130 °C, einem Druck von 300 kPa und einer Verweilzeit von 0,5 s zwischen glatten und geheizten Siegelbacken einer Siegelvorrichtung der Fa. Brugger, Typ HSG-ET, gesiegelt. Aus den gesiegelten Folien werden 20 mm breite Prüfstreifen geschnitten und die Festigkeit der Naht durch Trennen der Streifen in einer Zerreißmaschine üblicher Bauart bei einer Trenngeschwindigkeit von 100 %/min bestimmt (T-peel).

Die Opazität der Folie ist 72 % gemessen nach DIN 53 146, die Reibung 30 % nach ASTM D 1894-63 und die Dichte 0,9 g/cm³.

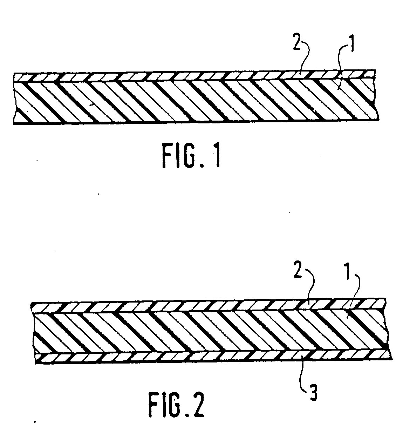

In Fig. 1 und 2 ist die Folie im Schnitt in Seitenansicht dargestellt. Sie umfaßt die Grundschicht 1 und die auf den Oberflächen der Grundschicht 1 vorhandene Heißsiegelschicht 2 (Fig. 1) bzw. Heilßsiegelschicht 2 und 3 (Fig. 2).

## Patentansprüche

1. Verfahren zur Herstellung einer mehrlagigen, mittels Coextrusion gewonnenen und Zusatzstoffe enthaltenden opaken Folie aus thermoplastischem, organischem Kunststoff mit einer Foliendicke von 8 - 100 um, die durch biaxiales Strecken orientiert ist, wobei die Folie aus einer Grundschicht (1) aus einem im wesentlichen isotaktischen Polypropylen-Homopolymerisat besteht und auf mindestens einer der Oberflächen der Grundschicht (1) eine Heißsiegelschicht (2/3) in einer Dicke von 0,5 - 2 um aus einem Copolymeren des Propylens mit Ethylen oder des Propylens mit Buten oder einem Terpolymeren des Propylens mit Ethylen und einem weiteren a-Olefin mit 4 - 10 C-Atomen aufweist, dadurch gekennzeichnet, daß die Grundschicht (1) feinverteilte Calciumcarbonat-Teilchen einer Größe von 0,2 - 20 um, vorzugsweise 2 - 8 um, in einer Menge von 1 - 25 Gew.-%, vorzugsweise 5 - 15 Gew.-%, bezogen auf das Gewicht des Polymeren enthält und daß man die Schmelze des die Grundschicht (1) bildenden Polymeren zusammen mit den darin fein verteilten Partikeln einerseits und die Schmelze des die Heißsiegelschicht-(en) bildenden Polymeren andererseits gemeinsam und gleichzeitig durch eine Flachdüse extrudiert, die erhaltene Flachfolie zur Verfestigung abkühlt, durch Strecken in Längs-und anschließend in Querrichtung orientiert und thermofixiert, wobei das Längsstreckverhältnis 5,5 und das Querstreckverhältnis 9,0 beträgt und die Temperatur während der Längsstreckung bei 120 - 130 °C und dabei bis zu 20 °C unterhalb der Temperatur liegt, bei welcher üblicherweise eine klare Folie aus dem gleichen Material in Längsrichtung gestreckt wird.

2. Verfahren nach Anspruch 1, dadurch gekennzeichnet, daß die Grundschicht (1) aus einem Polypropylen-Homopolymerisat mit einem isotaktischen Anteil von mindestens 90 % besteht.

3. Verfahren nach Anspruch 1 oder 2, dadurch gekennzeichnet, daß die Heißsiegelschicht(en) aus einem Mischpolymerisat von Propylen mit 1 bis 6 Gew.-%, vorzugsweise 2 bis 5 Gew.-%, Ethylen bestehen, wobei die Comonomeren im wesentlichen statistisch verteilt sind.

4. Verfahren nach einem der Ansprüche 1 bis 3, dadurch gekennzeichnet, daß die Heißsiegelschicht(en) (2/3) aus einem Copolymeren von Propylen mit Buten-(1) bestehen, wobei Buten-(1) vorzugsweise 10 bis 15 Gew.- % des Copolymeren ausmacht, wobei die Comonomeren im wesentlichen statistisch verteilt sind.

5. Verfahren nach einem der Ansprüche 1 bis 4, dadurch gekennzeichnet, daß die Heißsiegelschicht(en) (2/3) aus einem Terpolymeren aus
93,2 bis 99,0 Gew.-% Propylen
0,5 bis 1,9 Gew.-% Ethylen und
0,5 bis 4,9 Gew.-% eines C₄- bis Cio-a-Olefins
bestehen, wobei die Comonomeren im wesentlichen statistisch verteilt sind.

6. Verfahren nach Anspruch 5, dadurch gekennzeichnet, daß die Heißsiegelschicht(en) (2/3) als Comomoneres a-Olefin Buten-(1) oder Hexen-(1) enthalten.

7. Verfahren nach einem der Ansprüche 1 bis 6, dadurch gekennzeichnet, daß die Folie eine Dicke von 15 bis 50 um aufweist.

8. Verwendung der Folie erhalten nach einem Verfahren der Ansprüche 1 bis 7 für Verpakkungszwecke.

## Claims

1. Process for the manufacture of a multilayered, additive-containing, opaque film which has been obtained by means of coextrusion and is comprised of a thermoplastic, organic synthetic material having a film thickness of 8 to 100 µm and being oriented by biaxial stretching, said film consisting of a base layer (1) which comprises an essentially isotactic propylene homopolymer, and of a heat-sealable layer (2/3) which is present on at least one of the surfaces of said base layer (1) and has a thickness of 0.5 to 2 _{/1}.m and comprises a copolymer of propylene and ethylene or a copolymer of propylene and butene or a terpolymer of propylene and ethylene and a further a-olefin having 4 to 10 carbon atoms, characterized in that the base layer (1) contains finely divided calcium carbonate particles ranging in size from 0.2 to 20 µm, preferably from 2 to 8 µm, and being present in an amount of 1 to 25 % by weight, preferably of 5 to 15 % by weight, relative to the weight of the polymer, and in that the melt of the polymer forming the base layer (1), with the finely divided particles contained therein, on the one hand, and the melt of the polymer forming the heat-sealable layer(s) on the other hand, are simultaneously and jointly extruded through a flat die, that the resulting flat film is chilled for solidification, oriented by stretching it in the longitudinal direction and subsequently in the transverse direction and is heat-set, whereby the longitudinal stretching ratio is 5.5 and the transverse stretching ratio is 9.0 and the temperature during longitudinal stretching is 120 to 130 _{°} C and thus is up to 20 _{°} C lower than the temperature at which a clear film of the same material is normally stretched in the longitudinal direction.

2. Process according to claim 1, characterized in that the base layer (1) consists of a polypropylene homopolymer with an isotactic proportion of at least 90 %.

3. Process according to claim 1 or claim 2, characterized in that the heat-sealable layer(s) consist(s) of a copolymer of propylene and 1 to 6 % by weight, preferably 2 to 5 % by weight, of ethylene, whereby the comonomers are substantially statistically distributed.

4. Process according to any of claims 1 to 3, characterized in that the heat-sealable layer(s) (2/3) consist(s) of a copolymer of propylene and butene-(1), whereby the butene-(1) component preferably amounts to 10 to 15 % by weight of the copolymer, and whereby the comonomers are substantially statistically distributed.

5. Process according to any of claims 1 to 4, characterized in that the heat-sealable layer(s) (2/3) consist(s) of a terpolymer composed of
93.2 to 99.0 % by weight of propylene,
0.5 to 1.9 % by weight of ethylene, and
0.5 to 4.9 % by weight of an a-olefin with 4 to 10 carbon atoms,
whereby the comonomers are substantially statistically distributed.

6. Process according to claim 5, characterized in that the heat-sealable layer(s) (2/3) contain(s) butene-(1) or hexene-(1) as the a-olefin comonomer.

7. Process according to any of claims 1 to 6, characterized in that the film has a thickness in the range from 8 to 100 µm, in particular from 15 to 50 tim.

8. Use of the film obtained by a process according to one or more of claims 1 to 7 for packaging purposes.

## Revendications

1. Procédé de fabrication par coextrusion d'une feuille opaque multicouche, organique de matière thermoplastique ayant une épaisseur de 8 à 100 um, comprenant des additifs, qui est orientée par étirage biaxial, la feuille étant constituée d'une couche de base (1), d'un homopolymère de polypropylène essentiellement isotactique et présentant sur au moins une des surfaces de la couche de base (1) une couche thermosoudable (2/3) d'une épaisseur de 0,5-2 µm d'un copolymère de propylène avec l'éthylène ou de propylène avec le butène ou d'un terpolymère de propylène avec l'éthylène et une autre alpha-oléfine en C₄ à Cio, caractérisée en ce que la feuille de base (1) contient des particules de carbonate de calcium finement divisées d'une taille de 0,2 à 20 um, de préférence 2 à 8 µm, en une quantité de 1 à 25 % en poids, de préférence 5 à 15 % en poids, par rapport au poids du polymère et en ce que l'on extrude conjointement et simultanément à travers une filière plate la masse fondue du polymère formant la couche de base (1) en même temps que les particules qui y sont finement dispersées d'une part et la masse fondue du polymère formant la ou les couche(s) thermosousable(s) d'autre part, en ce que l'on refroidit la feuille plane obtenue pour la solidifier, en ce qu'on l'oriente par étirage dans le sens longitudinal puis dans le sens transversal et on le thermofixe, le rapport d'étirage dans le sens longitudinal s'élevant à 5,5 et le rapport d'étirage dans le sens transversal s'élevant à 9,0 et la température pendant l'étirage dans le sens longitudinal étant de 120 à 130 °C et de ce fait jusqu'à 20 °C en-dessous de la température à laquelle est habituellement étirée dans le sens longitudinal une feuille transparente de la même matière.

2. Procédé suivant la revendication 1, caractérisé en ce que la couche de base (1) se compose d'un homopolymère du polypropylène avec une fraction isotactique d'au moins 90 %.

3. Procédé suivant les revendications 1 ou 2, caractérisé en ce que la ou les couche(s) thermosoudable(s) se compose(nt) d'un copolymère du propylène avec 1 à 6 % en poids, de préférence 2 à 5 % en poids d'éthylène, les comonomères étant répartis de manière essentiellement statistique.

4. Procédé suivant l'une des revendications 1 à 3, caractérisé en ce que la ou les couche(s) thermosoudable(s) (2/3) se compose(nt) d'un copolymère du propylène avec le butène-(1), le butène-(1) représentant de préférence 10 à 15 % en poids du copolymère, les comonomères étant répartis d'une manière essentiellement statistique.

5. Procédé suivant l'une des revendications 1 à 4, caractérisé en ce que la ou les couche(s) thermosoudable(s) (2/3) se compose(nt) d'un terpolymère de :
93,2 à 9,0 % en poids de propylène ;
0,5 à 1,9 % en poids d'éthylène ; et
0,5 à 4,9 % en poids d'une alpha-oléfine en C₄ à Cₗo, les comonomères étant répartis d'une manière essentiellement statistique.

6. Procédé suivant la revendication 5, caractérisé en ce que la ou les couche(s) thermosoudable-(s) (2/3) contienne(nt) comme alpha-oléfine co- monomère du butène-(1 ) ou de l'hexène-(1).

7. Procédé suivant l'une des revendications 1 à 6, caractérisé en ce que la feuille présente une épaisseur de 15 à 50 microns.

8. Utilisation de la feuille obtenue suivant le procédé de l'une des revendications 1 à 7 dans des buts d'emballage.
